# EUROPEAN PATENT SPECIFICATION

(11) **EP 1 508 900 B1**
(45) Date of publication and mention of the grant of the patent: **23.06.2010**
(21) Application number: 03705135.6
(22) Date of filing: 13.02.2003
(51) Int. Cl.: G11B 27/36, G11B 27/30, G11B 20/18, G11B 20/12

(54) **TAPE RECORDING APPARATUS, CONTROL APPARATUS, CONTROL METHOD, AND PROGRAM**
BANDAUFZEICHNUNGSVORRICHTUNG, STEUERVORRICHTUNG, STEUERVERFAHREN UND PROGRAMM
APPAREIL D'ENREGISTREMENT DE BANDE, APPAREIL DE COMMANDE, PROCEDE DE COMMANDE ET PROGRAMME

(30) Priority: 03.04.2002 JP 2002100863
(43) Date of publication of application: 23.02.2005
(73) Proprietor: International Business Machines Corporation, Armonk, NY 10504 (US)
(72) Inventor: ITAGAKI, Hiroshi, IBM Japan Ltd., Yamato-shi, Kanagawa 242-8502 (JP)
(74) Representative: Gascoyne, Belinda Jane
(86) International application number: PCT/JP2003/001516
(87) International publication number: WO 2003/083866

(56) References cited:
- EP-A- 0 936 618
- WO-A-97/27545
- WO-A1-00/72323
- JP-A- 01 264 683
- JP-A- 04 044 688
- JP-A- 04 307 476
- JP-A- 07 006 572
- JP-A- 2001 256 733
- US-A1- 2003 028 714
- US-B1- 6 288 862
- "Linear Tape - Open (LTO) Technology White Paper" STORAGE HEAVEN, April 1998 (1998-04), XP002293942

## Description

### Technical Field

The present invention relates to a tape storage device, a control unit, a control method, a program, and a recording medium. Thepresent invention particularly relates to a tape storage device, a control unit, a control method, and a program which disregard a write fault.

### Background Art

Tape storage devices have been proposed that record data freshness degrees, which are information indicative of the degree of newness of new data to be newly recorded with respect to already-recorded old data, on a tape recording medium while associating the data freshness degrees with the new data. These tape storage devices perform recording so that the data freshness degrees become monotonically nondecreasing in accordance with positions on a tape.

In a tape storage device as mentioned above, when a fault occurs in which the value of a data freshness degree to be written is erroneous, a whole tape recording medium is scanned to specify the maximum value of the data freshness degrees associated with already-recorded old data, and then a data freshness degree that is higher than the maximum value is recorded in association with new data. However, the operation of the tape storage device scanning the whole tape recording medium is time-consuming.

Accordingly, it is an object of the present invention to provide a tape storage device, a control unit, a control method, a program, and a recording medium which are capable of solving the foregoing problem. This object is achieved by combinations of features set forth in independent claims in the scope of claims. Moreover, dependent claims prescribe further advantageous concrete examples of the present invention.

### Disclosure of the Invention

Specifically, according to a first mode of the present invention, a tape storage device for sequentially recording data is provided which comprises a recording section for recording a data freshness degree on a tape recording medium, in association with new data to be newly recorded, the data freshness degree being information indicating how new the new data is with respect to already-recorded old data; a determining section for determining whether or not a fault occurs in recording on the tape recording medium performed by the recording section; a reading section for reading a faulty portion freshness degree when it is determined that the fault occurs, a faulty portion freshness degree being the data freshness degree of a faulty portion on the tape recording medium; and a skip recording section (320, 350) responsive to a determination that the faulty portion freshness degree is higher than the freshness degree of the data immediately preceding the faulty portion, for causing the recording section to record a data freshness degree higher than the faulty portion freshness degree, immediately before the faulty portion. The first mode of the present invention also provides a control unit, a control method of controlling these device and unit, a program, and a recording medium storing the program.

Further, according to a second mode of the present invention, a tape storage device for sequentially recording data is provided which comprises a recording section for recording a data freshness degree on a tape recording medium, in association with new data to be newly recorded, the data freshness degree being information indicating how new the new data is with respect to already-recorded old data; a determining section for determining whether or not a fault occurs in recording on the tape recording medium performed by the recording section; and a skip recording section for causing the recording section to record a value when it is determined that the fault occurs, the value indicating that a faulty portion on the tape recording medium retains old invalid data; wherein the skip recording section is responsive to a determination that the faulty portion freshness degree is higher than the freshness degree of the data immediately preceding the faulty portion, to record a data freshness degree in the faulty portion which is lower than the data freshness degree recorded immediately before the faulty portion. The second mode of the present invention also provides a control unit, a control method of controlling these device and unit, a program, and a recording medium storing the program.

Note that the above-described summary of the invention does not list all necessary features of the present invention, and subcombinations of groups of these features can also be incorporated in the invention.

### Brief Description of the Drawings

Fig. 1 is a schematic diagram of a tape storage device 10.
Fig. 2 is a functional block diagram of the tape storage device 10.
Fig. 3 shows an example of data to be recorded by a recording section 210.
Fig. 4 shows examples of data freshness degrees which the tape storage device 10 records when a fault occurs in recording.
Fig. 5 is a flowchart concerning the tape storage device 10.
Fig. 6 is a flowchart concerning a tape storage device 10 in a first modification.
Fig. 7 is a functional block diagram of a tape storage device 10 in a second modification.
Fig. 8 is a flowchart concerning the tape storage device 10 in the second modification.
Fig. 9 shows an example of a hardware configuration of the tape storage device 10 according to any of the embodiment and modifications.

### Best Mode for Carrying Out the Invention

Hereinafter, the present invention will be described through an embodiment of the present invention. However, the embodiment described below is not intended to limit the invention according to claims, and all combinations of the features described in the embodiment are not necessarily essential for solving means of the present invention.

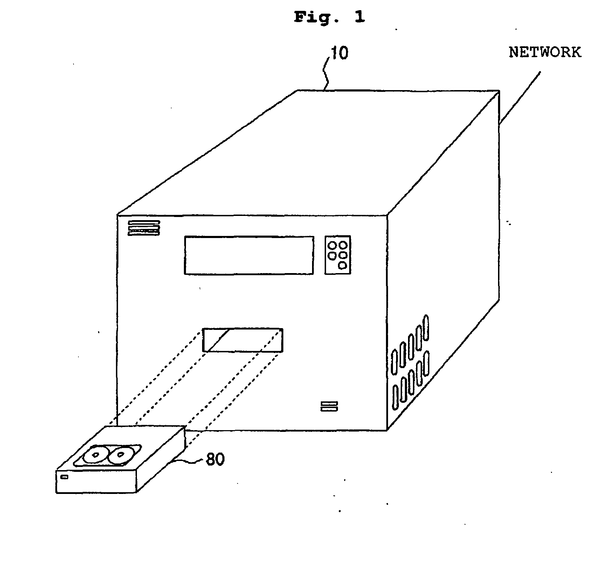

Fig. 1 is a schematic diagram of a tape storage device 10. The tape storage device 10 is connected to an external world through a network. The network is a network for I/O connection using, for example, IDE, SCSI interfaces, USB, Fiber Channel, or the like. The tape storage device 10 can be loaded with a tape storage medium 80. The tape storage device 10 is loaded with the tape storage medium 80, and then reads and records data. The tape storage device 10 is, for example, a tape drive based on the Linear Tape Open (hereinafter, referred to as LTO) specifications. The tape storage medium 80 is, for example, a tape recording medium based on the LTO specifications. Note that the LTO specifications are open-format specifications jointly developed by three companies: Hewlett-Packerd, IBM, and Seagate.

The tape storage device 10 overwrites data which have been already recorded on the tape storage medium 80. The tape storage device 10 acquires a written data freshness degree, which is a data freshness degree for use in recording of data, from a written freshness degree storing section provided on the tape storage medium 80. Using this written data freshness degree, the tape storage device 10 records a data freshness degree, which is information indicative of the degree of newness of new data to be newly recorded with respect to already-recorded old data, on the tape storage medium 80 while associating the data freshness degree with the new data. When a fault occurs in recording on the tape storage medium 80, the tape storage device 10 skips the faulty portion and continues recording. In this way, the tape storage device 10 can record data while making demarcation between a faulty portion, where already-recorded data remains, and new data.

When the tape storage device 10 according to this embodiment determines that a data freshness degree to be used in overwrite recording is erroneous, the tape storage device 10 can make demarcation between a faulty portion, where already-recorded data remains, and new data. That is, when a fault occurs in recording on the tape storage medium 80, the tape storage device 10 performs recording on the tape storage medium 80 so that the faulty portion will be distinguishable.

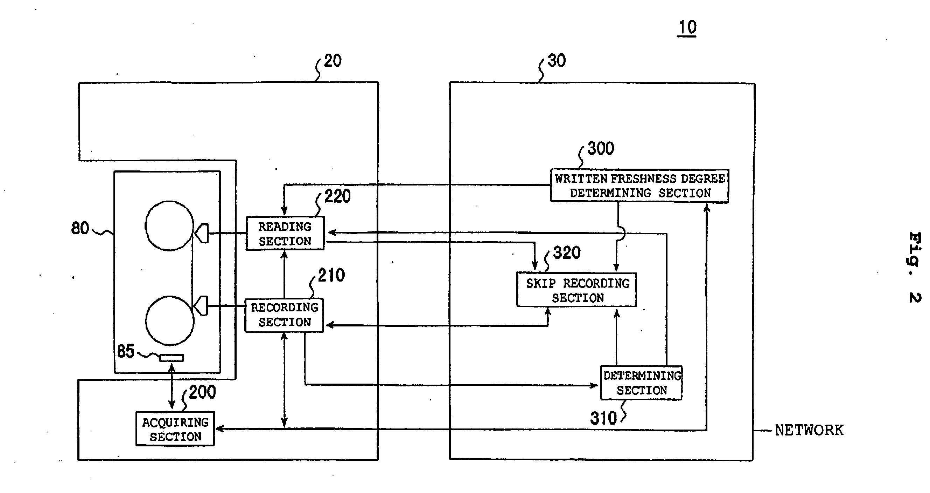

Fig. 2 is a functional block diagram of the tape storage device 10. The tape storage device 10 includes a tape drive unit 20 and a control unit 30. The tape drive unit 20 has an acquiring section 200, a recording section 210 and a reading section 220. In Fig. 2, the tape storage medium 80 is mounted in the tape drive unit 20. The tape storage medium 80 has the written freshness degree storing section 85. The written freshness degree storing section 85 stores a written data freshness degree, which is a data freshness degree for use in writing. Moreover, the written freshness degree storing section 85 stores a duplicate written date freshness degree, which is a copy of the written date freshness degree in question. In other words, the written freshness degree storing section 85 redundantly stores the written date freshness degree. Note that the written freshness degree storing section 85 is, for example, a nonvolatile recording medium. For example, the written freshness degree storing section 85 may be a flash memory or may be a SRAM.

As an initial operation when the tape storage medium 80 is mounted, the acquiring section 200 acquires a written data freshness degree and a duplicate written data freshness degree from the written freshness degree storing section 85. The acquiring section 200 then sends the written data freshness degree and the duplicate written data freshness degree to a written freshness degree determining section 300. Moreover, the acquiring section 200 sends the written data freshness degree to the recording section 210.

Note that, although the initial operation of the acquiring section 200 when the tape storage medium 80 is mounted is described above, the timing of this operation is not limited to when the tape storage medium 80 is mounted. For example, this operation may be carried out when the tape storage device 10 is activated, when the whole tape storage device 10 is reset, when the power to the tape storage device 10 is turned on, or when a new data group starts to be recorded.

In addition, the acquiring section 200 executes the following operations every time the recording section 210 records data on a tape recording medium. The acquiring section 200 receives a data freshness degree from the recording section 210. The acquiring section 200 then duplicates this data freshness degree. The acquiring section 200 records the data freshness degree and the copy thereof on the written freshness degree storing section 85, as a written data freshness degree and a duplicate written data freshness degree, respectively. Here, the data freshness degree is, for example, WP (Write Pass) information based on the LTO specifications.

The recording section 210 receives written data freshness degrees from the acquiring section 200 and a skip recording section 320. When the recording section 210 receives a written data freshness degree from the skip recording section 320, the recording section 210 performs recording using this written data freshness degree. When the recording section 210 does not receive a written data freshness degree from the skip recording section 320, the recording section 210 performs recording using a written data freshness degree received from the acquiring section 200. Using any of these written data freshness degrees, the recording section 210 records a data freshness degree, which is information indicative of the degree of newness of new data to be newly recorded with respect to already-recorded old data, on the tape storage medium 80 while associating the data freshness degree with the new data. Moreover, the recording section 210 sends a data recording state (information about whether or not the recording has succeeded, information about whether or not data to be written have been finished, a last-recorded data freshness degree, or the like) to each of the reading section 220, a determining section 310 and the skip recording section 320. Furthermore, every time the recording section 210 records a data freshness degree, the recording section 210 sends this data freshness degree to the acquiring section 200.

The reading section 220 receives a written freshness degree error notification, which indicates that the written data freshness degree is erroneous, from the written freshness degree determining section 300. Moreover, the reading section 220 receives a fault notification, which indicates the determination that a fault occurs in recording on the tape storage medium 80, from the determining section 310. When the reading section 220 receives a written freshness degree error notification and also receives a fault notification, then the reading section 220 reads a faulty portion freshness degree, which is the data freshness degree of a faulty portion on the tape storage medium 80. The reading section 220 then sends the faulty portion freshness degree to the skip recording section 320.

Moreover, the reading section 220 receives a data recording state from the recording section 210. The reading section 220 then analyzes the data recording state and thereby determines whether or not the last of data to be sequentially recorded by the recording section 210 has been recorded. When the last of data to be sequentially recorded by the recording section 210 has been recorded, the reading section 220 reads an end portion freshness degree, which is the data freshness degree of a predetermined area ahead of a location where the data in question is recorded on the tape storage medium 80. The reading section 220 then sends this end portion freshness degree to the skip recording section 320. Here, the predetermined area ahead of the location where the data is recorded, is an area where a search for a higher data freshness degree is continued because there is still a possibility of the presence of new data, after the tape storage device 10 has read the last-recorded data from the tape storage medium 80.

As an initial operation when the tape storage medium 80 is mounted, the written freshness degree determining section 300 receives a written data freshness degree and a duplicate written data freshness degree from the acquiring section 200. The written freshness degree determining section 300 determines whether or not the written data freshness degree is erroneous, by comparing the written data freshness degree and the duplicate written data freshness degree. When the written data freshness degree and the duplicate written data freshness degree are different from each other, the written freshness degree determining section 300 determines that the written data freshness degree is erroneous and sends a written freshness degree error notification to each of the reading section 220 and the skip recording section 320. In this embodiment, the written freshness degree determining section 300 determines that a written data freshness degree is erroneous when the written data freshness degree and its duplicate written data freshness degree are different from each other. However, a method of determining the erroneousness of a written data freshness degree is not limited to the foregoing embodiment. For example, the written freshness degree determining section 300 may determines that a written data freshness degree is erroneous when the written data freshness degree cannot be acquired even after the tape storage medium 80 has been mounted.

The determining section 310 receives a data recording state from the recording section 210. The determining section 310 then analyzes the data recording state and thereby determines whether or not a fault occurs in recording on the tape storage medium 80 performed by the recording section 210. When the determining section 310 determines that a fault occurs in recording on the tape storage medium 80, the determining section 310 sends a fault notification to each of the reading section 220 and the skip recording section 320.

The skip recording section 320 receives a written freshness degree error notification from the written freshness degree determining section 300. Moreover, the skip recording section 320 receives a fault notification from the determining section 310. When the skip recording section 320 receives a written freshness degree error notification and also receives a fault notification, then the skip recording section 320 receives a faulty portion freshness degree from the reading section 220. Thereafter, the skip recording section 320 receives a data recording state from the recording section 210. The skip recording section 320 analyzes the data recording state and thereby specifies a data freshness degree recorded immediately before the faulty portion prior to the occurrence of the fault. Subsequently, the skip recording section 320 determines whether or not the data freshness degree recorded immediately before the faulty portion is higher than the faulty portion freshness degree. When the skip recording section 320 determines that the data freshness degree recorded immediately before the faulty portion is higher than the faulty portion freshness degree, the skip recording section 320 retains the data freshness degree recorded immediately before the faulty portion without changing it. When the skip recording section 320 determines that the data freshness degree recorded immediately before the faulty portion is not higher than the faulty portion freshness degree, the skip recording section 320 sends a data freshness degree that is higher than the faulty portion freshness degree to the recording section 210, as a written data freshness degree.

Subsequently, the skip recording section 320 sends the recording section 210 a data freshness degree that is equal to or higher than the data freshness degree just recorded immediately before the faulty portion, and allows the recording section 210 to record the sent data freshness degree, immediately before the faulty portion. In this way, the skip recording section 320 can allows the recording section 210 to record a data freshness degree that is higher than a faulty portion freshness degree, immediately before a faulty portion. Accordingly, the skip recording section 320 enables data and data freshness degrees to be continuously recorded in portions subsequent to the faulty portion on the tape storage medium 80.

In addition, when the skip recording section 320 receives an end portion freshness degree from the reading section 220, the skip recording section 320 sends a data freshness degree that is higher than the end portion freshness degree to the recording section 210, as a written data freshness degree. The skip recording section 320 then allows the data freshness degree, which is higher than the data freshness degree of a predetermined area ahead of a location where the last data is written, to be recorded in association with the data. In this way, the skip recording section 320 can record new valid data while making it distinguishable from old data which have been already recorded ahead of the last data.

Note that, although the initial operation of the skip recording section 320 when the tape storage medium 80 is mounted is described above, the timing of this operation is not limited to when the tape storage medium 80 is mounted. For example, this operation may be carried out when the tape storage device 10 is activated, when the whole tape storage device 10 is reset, when the power to the tape storage device 10 is turned on, or when a new data group starts to be recorded.

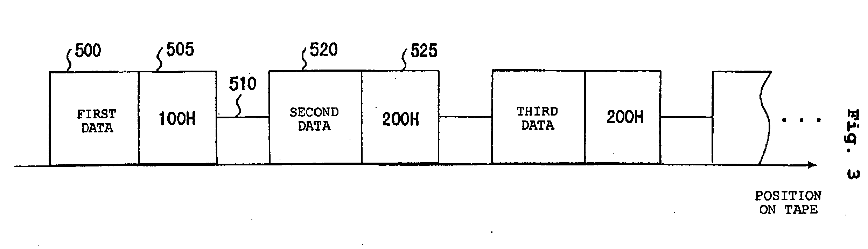

Fig. 3 shows an example of data to be recorded by the recording section 210. The horizontal axis represents the position on a tape. Fig. 3 shows that first data 500, a first data freshness degree 505, a separator 510, second data 520, and a second data freshness degree 525 are sequentially recorded on a tape. The recording section 210 records the data freshness degree, which is information indicative of the degree of newness of new data to be newly recorded with respect to already-recorded old data, on the tape storage medium 80 while associating the data freshness degree with the new data. For example, in Fig. 3, the recording section 210 records a value of 100 in hexadecimal, which is the first data freshness degree 505, in association with the first data 500. After recording the first data 500 and the first data freshness degree 505, the recording section 210 records the separator 510, which indicates a boundary between data groups. Subsequently, the recording section 210 records a value of 200 in hexadecimal, which is the second data freshness degree 525, in association with the second data 520. Thereafter, the recording section 210 similarly continues recording data and data freshness degrees until data to be recorded are finished, or until the tape recording medium 80 ends.

As described above, the recording section 210 sequentially records data freshness degrees so that the data freshness degrees become monotonically nondecreasing in accordance with positions on a tape. That is, the recording section 210 can record data and data freshness degrees so that a data freshness degree associated with new data to be newly recorded becomes higher than a data freshness degree associated with already-recorded old data.

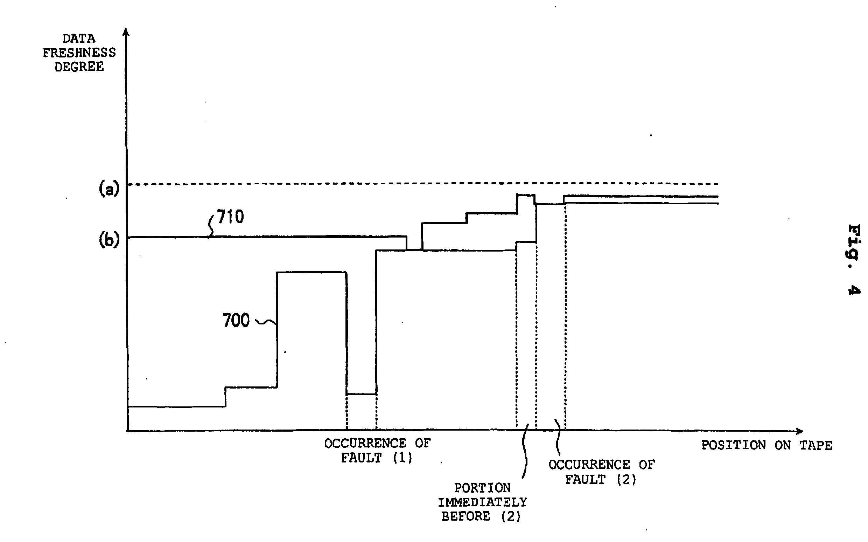

Fig. 4 shows examples of the data freshness degree which the tape storage device 10 records when a fault occurs in recording. The horizontal axis represents the position on a tape. The vertical axis represents the data freshness degree. Fig. 4 shows an example of a case where the tape storage device 10 first records data and data freshness degrees and then performs overwrite recording in the same positions on a tape where the foregoing recording has been performed. First, as indicated by a first graph 700, the tape storage device 10 sequentially records data freshness degrees. For example, at a portion of occurrence of a fault (1), the tape storage device 10 skips the faulty portion and continues recording in portions ahead of the faulty portion. Therefore, in the portion of the occurrence of a fault (1), the tape storage device 10 leaves a data freshness degree as it is which has been recorded since before the data freshness degrees indicated by the first graph 700 are recorded. Accordingly, when reading data, the tape storage device 10 can recognize that old data is stored in the portion of the occurrence of a fault (1). After the data freshness degrees indicated by the first graph 700 have been stored, the written freshness degree storing section 85 stores a written data freshness degree of a value (a), which is a data freshness degree equal to or higher than the maximum value of the first graph 700. The tape storage device 10 uses the written data freshness degree indicated by the value (a) in the next writing.

Next, the tape storage device 10 performs overwrite recording at the same positions on the tape where the above-described recording has been performed.

In the example shown in this drawing, it is assumed that the written freshness degree storing section 85 has stored a value (b), which is an erroneous written data freshness degree. That is, it is assumed that the value of a written data freshness degree to be stored in the written freshness degree storing section 85 has been changed since the recording section 210 recorded the data freshness degrees indicated by the first graph 700. The tape storage device 10 records data freshness degrees indicated by a second graph 710, by performing overwrite recording on the data freshness degrees indicated by the first graph 700. At a portion of occurrence of a fault (2), the tape storage device 10 skips the portion of the occurrence of a fault (2) and continues recording. However, if the tape storage device 10 simply skipped the portion of the occurrence of a fault (2) and continued recording, the tape storage device 10 cannot record data freshness degrees correctly. That is, the data freshness degree (e.g., the first graph 700) of data which has been already recorded on a tape recording medium will be higher than the data freshness degree of new data. Therefore, if the new data is continuously recorded in a manner of skipping the portion where the data has been recorded, the data freshness degree of data to be recorded after the skipping will be lower than the data freshness degree of the portion skipped due to the occurrence of a fault. As a result, the new data recorded after the skipping will be regarded as old data when the data are read out.

Hence, in this embodiment, the tape storage device 10 records a data freshness degree that is higher than the data freshness degree of the portion of the occurrence of a fault (2), immediately before the portion of the occurrence of a fault (2), as in the example shown in Fig. 4. Using this newly recorded data freshness degree, the tape storage device 10 skips the portion of the occurrence of a fault (2) and continues recording.

As described above, even when a written data freshness degree is erroneous, the tape storage device 10 can correctly record a data freshness degree to make demarcation between already-recorded data and new data.

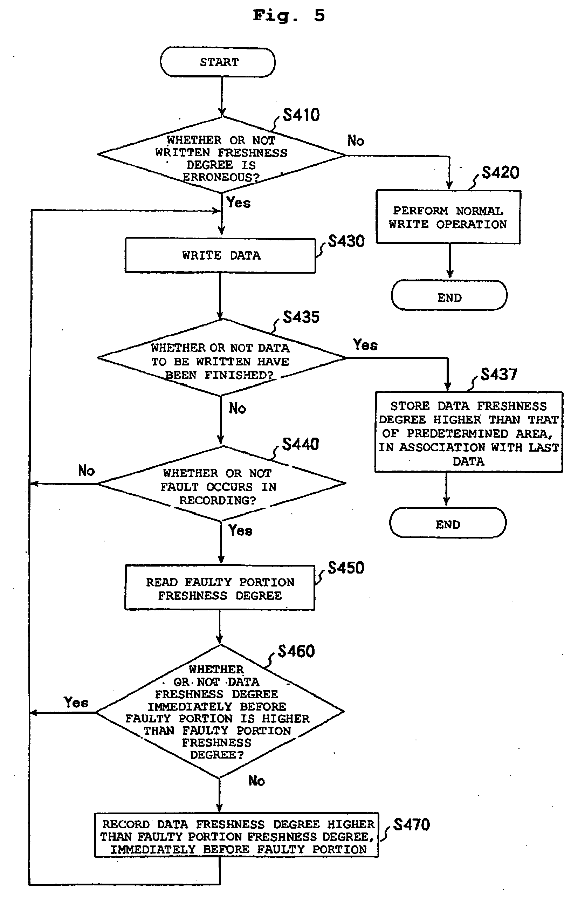

Fig. 5 is a flowchart concerning the tape storage device 10. The written freshness degree determining section 300 determines whether or not a written data freshness degree is erroneous (S410). When the written data freshness degree is not erroneous (S410: NO), the tape storage device 10 performs normal write operation (S420).

When it is determined that the written data freshness degree is erroneous (S410: YES), the tape storage device 10 repeats the following operations. The recording section 210 records data and the data freshness degree in association with the data (S430). More specifically, the recording section 210 uses the written data freshness degree determined to be erroneous, as an initial value of the data freshness degree. Alternatively, the recording section 210 may use the duplicate written data freshness degree. The recording section 210 then sequentially records data freshness degrees so that the data freshness degrees become monotonically nondecreasing in accordance with positions on the tape. Note that the recording section 210 may use a predetermined value as the initial value of the data freshness degree. Subsequently, the reading section 220 determines whether or not data to be written have been finished (S435). When it is determined that the data to be written have been finished (S435: YES), the reading section 220 reads the data freshness degree of a predetermined area ahead of a location where the last of the data is written. The skip recording section 320 then allows a data freshness degree that is higher than the read data freshness degree, to be recorded in association with the last data (S437).

When it is not determined that the data to be written have been finished (S435: NO), the determining section 310 determines whether or not a fault occurs in recording of the data (S440). When it is determined that a fault occurs in recording of the data (S440: YES), the reading section 220 reads a faulty portion freshness degree (S450). Subsequently, the determining section 310 determines whether or not the data freshness degree immediately before the faulty portion is higher than the faulty portion freshness degree (S460). When it is not determined that the data freshness degree immediately before the faulty portion is higher than the faulty portion freshness degree (S460: NO), the skip recording section 320 records a data freshness degree that is higher than the faulty portion freshness degree, immediately before the faulty portion (S470).

In this way, when a fault occurs in recording of data, the tape storage device 10 can disregard the faulty portion and continue recording even if a written data freshness degree is erroneous.

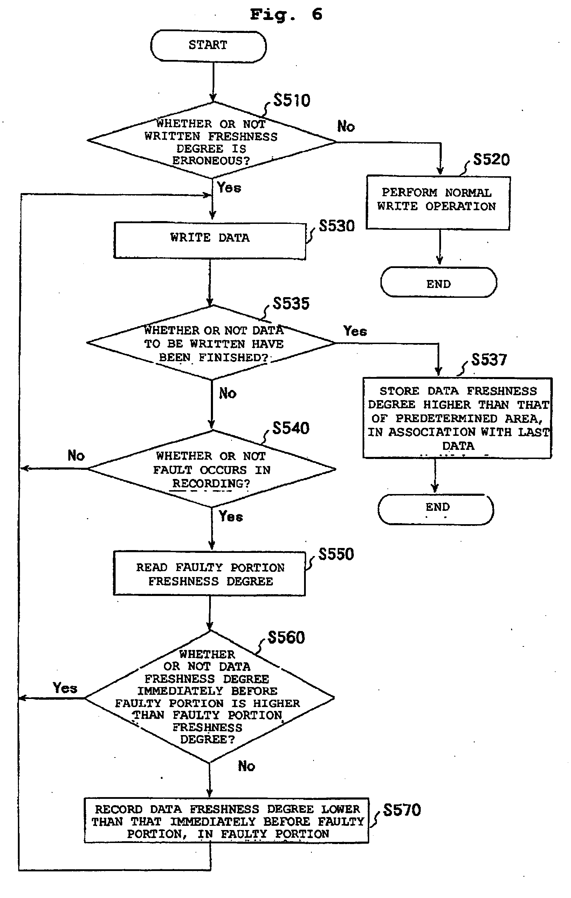

Fig. 6 is a flowchart concerning a tape storage device 10 in a first modification. A functional block diagram of the tape storage device 10 according to the first modification is similar to that of the tape storage device 10 shown in Fig. 2. Moreover, the functions of the tape storage device 10 according to the first modification are similar to those of the tape storage device 10 shown in Fig. 2 except the determining section 310. Therefore, the function of the determining section 310 will be described in Fig. 6. The operations in S510, S520, S530, S535, S537, S540, S550, and S560 shown in this drawing are similar to those in S410, S420, S430, S435, S437, S440, S450, and S460 shown in Fig. 5, respectively, and therefore description thereof will be omitted.

When the determining section 310 does not determine that the data freshness degree immediately before the faulty portion is higher than the faulty portion freshness degree (S560: NO), the skip recording section 320 according to this modification records a data freshness degree that is lower than the data freshness degree recordedimmediatelybefore the faulty portion, in the faulty portion (S570). In this way, when it is determined that a fault occurs, the skip recording section 320, based on a faulty portion freshness degree, can allow a data freshness degree indicating that the data will be overwritten except the faulty portion, to be recorded. Accordingly, the tape storage device 10 can disregard a faulty portion by additionally performing recording on the faulty portion, without rewinding the tape up to a portion immediately before the faulty portion.

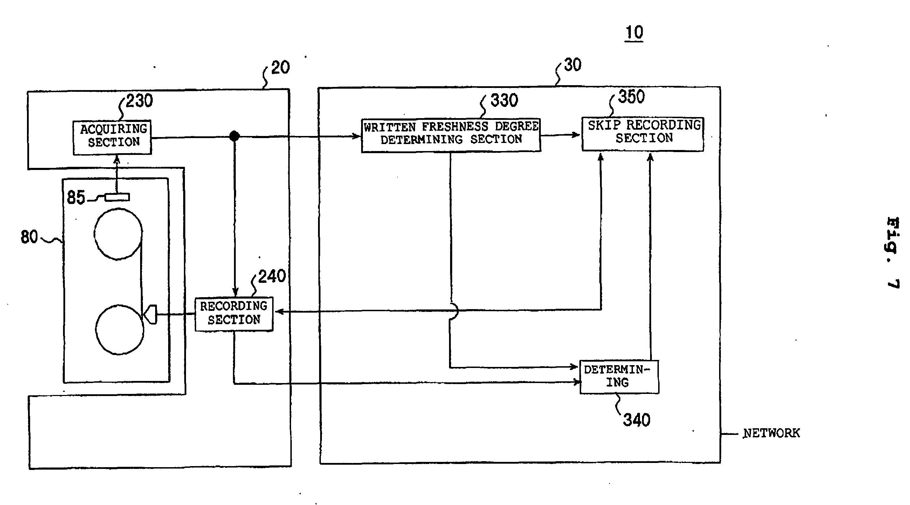

Fig. 7 is a functional block diagram of a tape storage device 10 in a second modification. The tape storage device 10 according to this modification includes a tape drive unit 20 and a control unit 30. The tape drive unit 20 has an acquiring section 230 and a recording section 240. The control unit 30 has a written freshness degree determining section 330, a determining section 340 and a skip recording section 350. The tape storage medium 80 and the written freshness degree storing section 85 are similar to those shown in Fig. 2. In addition, the operation of the acquiring section 230 is substantially the same as that of the acquiring section 200 in Fig. 2, and therefore description thereof will be omitted.

The recording section 240 receives written data freshness degrees from the acquiring section 230 and the skip recording section 350. When the recording section 240 receives a written data freshness degree from the skip recording section 350, the recording section 240 performs recording using this written data freshness degree. When the recording section 240 does not receive a written data freshness degree from the skip recording section 350, the recording section 240 performs recording using a written data freshness degree received from the acquiring section 230. The recording section 240 records any of these written data freshness degrees on the tape storage medium 80, in association with data. Moreover, the recording section 240 sends a data recording state (whether or not the recording has succeeded, whether or not data to be written have been finished, or the like) to each of the determining section 340 and the skip recording section 350.

As an initial operation when the tape storage medium 80 is mounted, the written freshness degree determining section 330 receives a written data freshness degree from the acquiring section 230. The written freshness degree determining section 330 determines whether or not the written data freshness degree is erroneous. When the written freshness degree determining section 330 determines that the written data freshness degree is erroneous, the written freshness degree determining section 330 sends a written freshness degree error notification to the skip recording section 350.

The determining section 340 receives a data recording state from the recording section 240. The determining section 340 then analyzes the data recording state and thereby determines whether or not a fault occurs in recording on the tape storage medium 80 performed by the recording 240. When the determining section 340 determines that a fault occurs in recording on the tape storage medium 80, the determining section 340 sends a fault notification to the skip recording section 350.

The skip recording section 350 receives a written freshness degree error notification from the written freshness degree determining section 330. Moreover, the skip recording section 350 receives a fault notification from the determining section 340. When the skip recording section 350 receives a written freshness degree error notification and also receives a fault notification, the skip recording section 350 receives a data recording state from the recording section 240. The skip recording section 350 analyzes the data recording state and thereby specifies a data freshness degree recorded immediately before the faulty portion. The skip recording section 350 then sends the recording section 240 a data freshness degree that is lower than the data freshness degree recorded immediately before the faulty portion, as a written data freshness degree, and allows the recording section 240 to record the sent data freshness degree in the faulty portion.

Accordingly, when it is determined that a fault occurs, the skip recording section 350 can allow the recording section 240 to record a value indicating that the faulty portion on the tape storage medium 80 retains old invalid data.

Note that, although the skip recording section 350 uses a data freshness degree that is lower than the data freshness degree recorded immediately before a faulty portion as a value to be recorded in the faulty portion in this embodiment, a value to be recorded in a faulty portion is not limited to this. For example, the skip recording section 350 may record a predetermined data pattern in a faulty portion. For example, the skip recording section 350 may record a value such as the separator 510 in Fig. 2 indicative of not being valid data. The skip recording section 350 may record a DSS (Data Signal Separator) based on the LTO specifications as the separator 510.

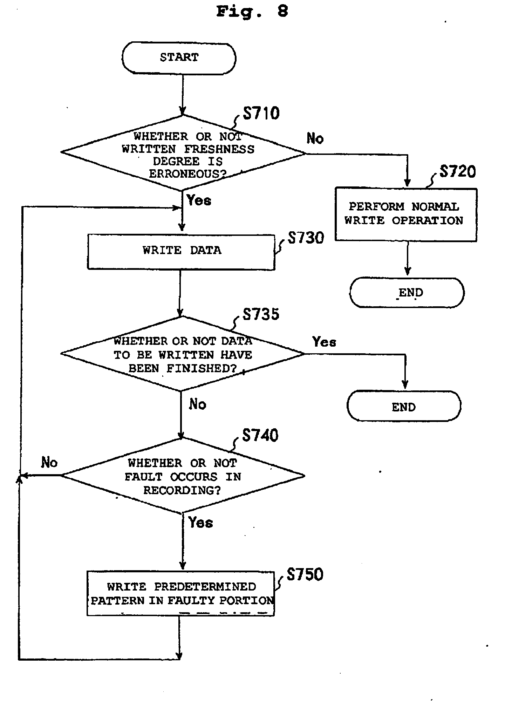

Fig. 8 is a flowchart concerning the tape storage device 10 in the second modification. The written freshness degree determining section 330 determines whether or not a written data freshness degree is erroneous (S710). When the written data freshness degree is not erroneous (S710: NO), the tape storage device 10 performs normal write operation (S720).

Next, when the written data freshness degree is erroneous (S710: YES), the tape storage device 10 repeats the following operations. The recording section 240 records data and the data freshness degree in association with the data (S730). More specifically, the recording section 240 uses the written data freshness degree determined to be erroneous, as an initial value of the data freshness degree. Alternatively, the recording section 240 may use the duplicate written data freshness degree. Thereafter, the recording section 240 sequentially records data freshness degrees so that the data freshness degrees become monotonically nondecreasing in accordance with positions on the tape. Note that the recording section 240 may use a predetermined value as the initial value of the data freshness degree. Subsequently, the recording section 240 determines whether or not data to be written have been finished (S735). When it is not determined that the data to be written have been finished (S735: NO), the determining section 340 determines whether or not a fault occurs in recording of the data (S740). When it is determined that a fault occurs in recording of the data, the skip recording section 350 writes a predetermined pattern indicating that the faulty portion retains old invalid data (S750).

As described above, the tape storage device 10 according to this modification can record new data while making it distinguishable from old data recorded in a faulty portion, by additionally performing recording on the faulty portion, without reading the data freshness degree of the faulty portion.

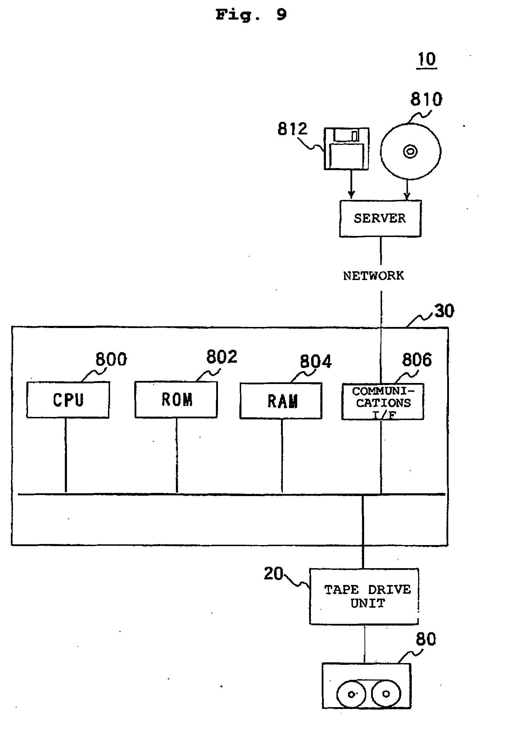

Fig. 9 shows an example of a hardware configuration of the tape storage device 10 according to any of the embodiment and modifications described above. The tape storage device 10 includes the tape drive unit 20 and the control unit 30. The functions of the control unit 30 are implemented by the cooperation of a computer, including a CPU 800, a ROM 802, a RAM 804, and a communications interface (communications I/F) 806, and a program executed on the computer.

The program implementing the control unit 30 includes a written freshness degree determining module, a determining module and a skip recording module. These modules are programs to cause the computer to function as the written freshness degree determining section 300, the determining section 310, the skip recording section 320, the written freshness degree determining section 330, determining section 340, and the skip recording section 350.

The above-mentioned programs or modules may be stored on an external storage medium. For the storage medium, it is possible to use a diskette 812 or a CD-ROM 810, and further, an optical recording medium such as a DVD or PD, a magneto-optic recording medium such as an MD, a tape medium, a semiconductor memory such as an IC card, or the like. The program stored on any of these storage media is provided to the control unit 30 via a server or the like connected to the control unit 30 through a network. Moreover, a storage device such as a hard disk or RAM installed in a server or the like connected to a private communication network or the Internet, may be used as a recording medium, and the program may be provided to the control unit 30 through the network.

As described above, when a data freshness degree is defective, and at the same time, a fault occurs in recording of data, the tape storage device 10 carries out the operations, such as reading and writing, on a tape recording medium and thus disregards the faulty portion. For example, the tape storage device 10 records a data freshness degree that is higher than the data freshness degree of a faulty portion, immediately before the faulty portion. Then, using the data freshness degree that is higher than the data freshness degree of the faulty portion, the tape storage device 10 skips the faulty portion and continuously records data. In this case, the tape storage device 10 can make the data freshness degree immediately before a faulty portion higher than the data freshness degree of the faulty portion. Accordingly, even when it is determined that a data freshness degree for use in overwrite recording is erroneous, the tape storage device 10 can make demarcation between a faulty portion, where already-recorded data remains, and new data.

Further, the tape storage device 10 performs the above-described recording operations limitedly in a narrow area, such as a faulty portion and its surrounding area on a tape. Therefore, the tape storage device 10 can effectively disregard a fault and continue recording.

According to the above-described embodiment, a tape storage device, a control unit, a control method, a program, and a recording medium which are described in the following respective items, are realized.
(Item 1) A tape storage device which sequentially records data, including: a recording sectionwhich records a data freshness degree on a tape recording medium, in association with new data to be newly recorded, the data freshness degree being information indicating how new the new data is with respect to already-recorded old data; a determining section which determines whether or not a fault occurs in recording on the tape recording medium performed by the recording section; a reading section which reads a faulty portion freshness degree when it is determined that the fault occurs, the faulty portion freshness degree being the data freshness degree of a faulty portion on the tape recording medium; and a skip recording section which allows the recording section to record a data freshness degree higher than the faulty portion freshness degree, immediately before the faulty portion.
(Item 2) The tape storage device according to Item 1, wherein when it is determined that the data freshness degree recorded immediately before the faulty portion prior to occurrence of the fault is higher than the faulty portion freshness degree, the skip recording section retains the data freshness degree recorded immediately before the faulty portion prior to occurrence of the fault, without changing it.
(Item 3) The tape storage device according to Item 1, wherein the skip recording section continuously records data and data freshness degrees in portions subsequent to the faulty portion on the tape recording medium, using a data freshness degree that is equal to or higher than the data freshness degree just recorded immediately before the faulty portion.
(Item 4) The tape storage device according to Item 1, wherein when the data is the last of data to be sequentially recorded by the recording section, the reading section reads the data freshness degree of a predetermined area ahead of a location where the last data is to be recorded on the tape recording medium, and the skip recording section allows the recording section to record a data freshness degree higher than the data freshness degree of the predetermined area, in association with the data.
(Item 5) The tape storage device according to Item 1, further including: an acquiring section which acquires a written data freshness degree from the tape recording medium, the written data freshness degree being a data freshness degree for use in recording on the tape recording medium; and a written freshness degree determining section which determines whether or not the written data freshness degree is erroneous, wherein in a case where it is determined that the written data freshness degree is erroneous, the reading section reads the faulty portion freshness degree, which is the data freshness degree of a faulty portion in recording on the tape recording medium, when it is determined that the fault occurs, and the skip recording section allows the recording section to record a data freshness degree higher than the faulty portion freshness degree, immediately before the faulty portion.
(Item 6) A tape storage device which sequentially records data, including: a recording sectionwhich records a data freshness degree on a tape recording medium, in association with new data to be newly recorded, the data freshness degree being information indicating how new the new data is with respect to already-recorded old data; a determining section which determines whether or not a fault occurs in recording on the tape recording medium performed by the recording section; and a skip recording section which allows the recording section to record a value when it is determined that the fault occurs, the value indicating that a faulty portion on the tape recording medium retains old invalid data.
(Item 7) The tape storage device according to Item 6, wherein the skip recording section records a data freshness degree lower than the data freshness degree recorded immediately before the faulty portion, in the faulty portion.
(Item 8) The tape storage device according to Item 6, further including a reading section which reads a faulty portion freshness degree when it is determined that the fault occurs, the faulty portion freshness degree being the data freshness degree of the faulty portion, wherein, based on the faulty portion freshness degree, the skip recording section allows the recording section to record a data freshness degree indicating that the data will be overwritten except the faulty portion.
(Item 9) The tape storage device according to any one of Items 1 to 8, wherein the tape storage device is a tape drive based on the LTO specifications, and the tape recording medium is a tape recording medium based on the LTO specifications.
(Item 10) A control unit for controlling a tape drive unit including a recording section which sequentially records a data freshness degree on a tape recording medium, in association with new data to be newly recorded, and a reading section which reads a data freshness degree, the data freshness degree being information indicating how new the new data is with respect to already-recorded old data, the control unit including: a determining section which determines whether or not a fault occurs in recording on the tape recording medium performed by the recording section, and which allows the reading section to read a faulty portion freshness degree when it is determined that the fault occurs, the faulty portion freshness degree being the data freshness degree of a faulty portion on the tape recording medium; and a skip recording section which allows the recording section to record a data freshness degree higher than the faulty portion freshness degree, immediately before the faulty portion.
(Item 11) A control unit for controlling a tape drive unit including a recording section which records a data freshness degree on a tape recording medium, in association with new data to be newly recorded, and a reading section which reads a data freshness degree, the data freshness degree being information indicating how new the new data is with respect to already-recorded old data, the control unit including: a determining section which determines whether or not a fault occurs in recording on the tape recording medium performed by the recording section; and a skip recording section which allows the recording section to record a value when it is determined that the fault occurs, the value indicating that a faulty portion on the tape recording medium retains old invalid data.
(Item 12) A control method of controlling a tape storage device which sequentially records data, the method including the steps of: allowing a data freshness degree to be recorded on a tape recording medium, in association with new data to be newly recorded, the data freshness degree being information indicating how new the new data is with respect to already-recorded old data; determining whether or not a fault occurs in recording on the tape recording medium; allowing a faulty portion freshness degree to be read when it is determined that the fault occurs, the faulty portion freshness degree being the data freshness degree of a faulty portion on the tape recording medium; and allowing a data freshness degree higher than the faulty portion freshness degree to be recorded immediately before the faulty portion.
(Item 13) A control method of controlling a tape storage device which sequentially records data, the method including the steps of: allowing a data freshness degree to be recorded on a tape recording medium, in association with new data to be newly recorded, the data freshness degree being information indicating how new the new data is with respect to already-recorded old data; determining whether or not a fault occurs in recording on the tape recording medium; and allowing a value to be recorded when it is determined that the fault occurs, the value indicating that a faulty portion on the tape recording medium retains old invalid data.
(Item 14) The control method according to Item 12 or 13, wherein the tape storage device is a tape drive based on the LTO specifications, and the tape recording medium is a tape recording medium based on the LTO specifications.
(Item 15) A program for controlling a tape storage device by using a computer, the tape storage device sequentially recording data, the program allowing the computer to realize: a function of recording a data freshness degree on a tape recording medium, in association with new data to be newly recorded, the data freshness degree being information indicating how new the new data is with respect to already-recorded old data; a function of determining whether or not a fault occurs in recording on the tape recording medium; a function of reading a faulty portion freshness degree when it is determined that the fault occurs, the faulty portion freshness degree being the data freshness degree of a faulty portion on the tape recording medium; and a function of recording a data freshness degree higher than the faulty portion freshness degree, immediately before the faulty portion.
(Item 16) A program for controlling a tape storage device by using a computer, the tape storage device sequentially recording data, the program allowing the computer to realize: a function of recording a data freshness degree on a tape recording medium, in association with new data to be newly recorded, the data freshness degree being information indicating how new the new data is with respect to already-recorded old data; a function of determining whether or not a fault occurs in recording on the tape recording medium; and a function of recording a value when it is determined that the fault occurs, the value indicating that a faulty portion on the tape recording medium retains old invalid data.
(Item 17) The program according to Item 15 or 16, wherein the tape storage device is a tape drive based on the LTO specifications, and the tape recording medium is a tape recording medium based on the LTO specifications.
(Item 18) A recording medium storing a program for controlling a tape storage device by using a computer, the tape storage device sequentially recording data, the program allowing the computer to realize: a function of recording a data freshness degree on a tape recording medium, in association with new data to be newly recorded, the data freshness degree being information indicating how new the new data is with respect to already-recorded old data; a function of determining whether or not a fault occurs in recording on the tape recording medium; a function of reading a faulty portion freshness degree when it is determined that the fault occurs, the faulty portion freshness degree being the data freshness degree of a faulty portion on the tape recording medium; and a function of recording a data freshness degree higher than the faulty portion freshness degree, immediately before the faulty portion.
(Item 19) A recording medium storing a program for controlling a tape storage device by using a computer, the tape storage device sequentially recording data, the program allowing the computer to realize: a function of recording a data freshness degree on a tape recording medium, in association with new data to be newly recorded, the data freshness degree being information indicating how new the new data is with respect to already-recorded old data; a function of determining whether or not a fault occurs in recording on the tape recording medium; and a function of recording a value when it is determined that the fault occurs, the value indicating that a faulty portion on the tape recording medium retains old invalid data.
(Item 20) The recording medium according to Item 18 or 19, wherein the tape storage device is a tape drive based on the LTO specifications, and the tape recording medium is a tape recording medium based on the LTO specifications.

Although the present invention has been described above using the embodiment, the technical scope of the present invention is not limited to the scope described in the embodiment. It is possible to add various alterations or modifications to the above-described embodiment.

As apparent from the above description, according to the present invention, it is possible to disregard a fault in recording on a tape recording medium.

## Claims

1. A tape storage device (10) which sequentially records data, the device comprising:
a recording section (240) for recording a data freshness degree (505, 525) on a tape recording medium, in association with new data to be newly recorded, the data freshness degree being information indicating how new the new data is with respect to already-recorded old data;
a determining section (310, 340) for determining whether or not a fault occurs in recording on the tape recording medium performed by the recording section;
a reading section (220) for reading a faulty portion freshness degree when it is determined that the fault occurs, a faulty portion freshness degree being the data freshness degree of a faulty portion on the tape recording medium; and
a skip recording section (320, 350) responsive to a determination that the faulty portion freshness degree is higher than the freshness degree of the data immediately preceding the faulty portion, for causing the recording section to record a data freshness degree higher than the faulty portion freshness degree, immediately before the faulty portion.

2. The tape storage device (10) according to claim 1, wherein when it is determined that the data freshness degree (505, 525) recorded immediately before the faulty portion prior to occurrence of the fault is higher than the faulty portion freshness degree, the skip recording section (320, 350) retains the data freshness degree recorded immediately before the faulty portion prior to occurrence of the fault, without changing it.

3. The tape storage device (10) according to claim 1, wherein the skip recording section (320, 350) continuously records data and data freshness degrees (505, 525) in portions subsequent to the faulty portion on the tape recording medium, using a data freshness degree that is equal to or higher than the data freshness degree just recorded immediately before the faulty portion.

4. The tape storage device (10) according to claim 1,
wherein when the data is the last of data to be sequentially recorded by the recording section (240), the reading section (220) reads the data freshness degree (505, 525) of a predetermined area ahead of a location where the last data is to be recorded on the tape recording medium, and the skip recording section (320, 350) allows the recording section to record a data freshness degree higher than the data freshness degree of the predetermined area, in association with the data.

5. The tape storage device (10) according to claim 1, further comprising:
an acquiring section (230) which acquires a written data freshness degree (505, 525) from the tape recording medium, the written data freshness degree being a data freshness degree for use in recording on the tape recording medium; and
a written freshness degree determining section (300, 330) which determines whether or not the written data freshness degree is erroneous,
wherein in a case where it is determined that the written data freshness degree is erroneous,
the reading section (220) reads the faulty portion freshness degree, which is the data freshness degree of a faulty portion in recording on the tape recording medium, when it is determined that the fault occurs, and
the skip recording section (320, 350) allows the recording section to record a data freshness degree higher than the faulty portion freshness degree, immediately before the faulty portion.

6. A tape storage device (10) which sequentially records data, comprising:
a recording section (240) for recording a data freshness degree on a tape recording medium, in association with new data to be newly recorded, the data freshness degree being information indicating how new the new data is with respect to already-recorded old data;
a determining section (310, 340) for determining whether or not a fault occurs in recording on the tape recording medium performed by the recording section; and
a skip recording section (320, 350) for causing the recording section to record a value when it is determined that the fault occurs, the value indicating that a faulty portion on the tape recording medium retains old invalid data;
wherein the skip recording section is responsive to a determination that the faulty portion freshness degree is higher than the freshness degree of the data immediately preceding the faulty portion, to record a data freshness degree in the faulty portion which is lower than the data freshness degree recorded immediately before the faulty portion.

7. The tape storage device (10) according to claim 6, further comprising a reading section (220) which reads a faulty portion freshness degree when it is determined that the fault occurs, the faulty portion freshness degree being the data freshness degree of the faulty portion,
wherein, based on the faulty portion freshness degree, the skip recording section (320, 350) allows the recording section to record a data freshness degree indicating that the data will be overwritten except the faulty portion.

8. A control unit (30) for controlling a tape drive unit (20) including a recording section (210, 240) which sequentially records a data freshness degree (505, 525) on a tape recording medium, in association with new data to be newly recorded, and a reading section (220) which reads a data freshness degree, the data freshness degree being information indicating how new the new data is with respect to already-recorded old data, the control unit comprising:
a determining section (310, 340) which determines whether or not a fault occurs in recording on the tape recording medium performed by the recording section, and which allows the reading section to read a faulty portion freshness degree when it is determined that the fault occurs, the faulty portion freshness degree being the data freshness degree of a faulty portion on the tape recording medium; and
a skip recording section (320, 350) responsive to a determination that the faulty portion freshness degree is higher than the freshness degree of the data immediately preceding the faulty portion, which causes the recording section to record a data freshness degree higher than the faulty portion freshness degree, immediately before the faulty portion.

9. A control method of controlling a tape storage device (10) which sequentially records data, the method comprising the steps of:
allowing a data freshness degree (505, 525) to be recorded on a tape recording medium, in association with new data to be newly recorded, the data freshness degree being information indicating how new the new data is with respect to already-recorded old data;
determining whether or not a fault occurs in recording on the tape recording medium;
allowing a faulty portion freshness degree to be read when it is determined that the fault occurs, the faulty portion freshness degree being the data freshness degree of a faulty portion on the tape recording medium; and
responsive to a determination that the faulty portion freshness degree is higher than the freshness degree of the data immediately preceding the faulty portion, allowing a data freshness degree higher than the faulty portion freshness degree to be recorded immediately before the faulty portion.

10. A program for controlling a tape storage device (10) by using a computer, the tape storage device sequentially recording data, the program comprising program code which when executed causes the computer to perform the method according to claim 9.

## Patentansprüche

1. Bandspeichereinheit (10), die sequenziell Daten aufzeichnet, wobei die Einheit Folgendes umfasst:
einen Aufzeichnungsabschnitt (240) zum Aufzeichnen eines Datenfrischegrads (505, 525) auf einem Bandaufzeichnungsmedium im Zusammenhang mit neuen Daten, die neu aufgezeichnet werden sollen, wobei der Datenfrischegrad Informationen darstellt, die angeben, wie neu die neuen Daten in Bezug auf bereits aufgezeichnete alte Daten sind;
einen Feststellungsabschnitt (310, 340) zum Feststellen, ob bei der Aufzeichnung auf dem Bandaufzeichnungsmedium, die durch den Aufzeichnungsabschnitt ausgeführt wird, ein Fehler auftritt;
einen Leseabschnitt (220) zum Lesen des Frischegrads eines fehlerhaften Abschnitts, wenn festgestellt wird, dass ein Fehler aufgetreten ist, wobei der Frischegrad eines fehlerhaften Abschnitts der Datenfrischegrad eines fehlerhaften Abschnitts auf dem Bandaufzeichnungsmedium ist; und
einen Aufzeichnungsübersprungabschnitt (320, 350), der auf eine Feststellung reagiert, dass der Frischegrad eines fehlerhaften Abschnitts höher ist als der Frischegrad der Daten, die dem fehlerhaften Abschnitt unmittelbar vorhergehen, um zu bewirken, dass der Aufzeichnungsabschnitt einen Datenfrischegrad aufzeichnet, der höher ist als der Frischegrad des fehlerhaften Abschnitts unmittelbar vor dem fehlerhaften Abschnitt.

2. Bandspeichereinheit (10) nach Anspruch 1, wobei dann, wenn festgestellt wird, dass der Datenfrischegrad (505, 525), der unmittelbar vor dem fehlerhaften Abschnitt vor dem Auftreten des Fehlers aufgezeichnet wird, höher als der Frischegrad des fehlerhaften Abschnitts ist, der Aufzeichnungsübersprungabschnitt (320, 350) den Datenfrischegrad, der unmittelbar vor dem fehlerhaften Abschnitt vor dem Auftreten des Fehlers aufgezeichnet wurde, unverändert beibehält.

3. Bandspeichereinheit (10) nach Anspruch 1, wobei der Aufzeichnungsübersprungabschnitt (320, 350) Daten und Datenfrischegrade (505, 525) in Abschnitten nach dem fehlerhaften Abschnitt weiter aufzeichnet unter Verwendung eines Datenfrischegrads, der gleich dem Datenfrischegrad oder höher als dieser ist, der gerade unmittelbar vor dem fehlerhaften Abschnitt aufgezeichnet wurde.

4. Bandspeichereinheit (10) nach Anspruch 1, wobei dann, wenn die Daten die letzten Daten sind, die durch den Aufzeichnungsabschnitt (240) aufgezeichnet werden sollen, der Leseabschnitt (220) den Datenfrischegrad (505, 525) eines vorgegebenen Bereichs vor einer Stelle, an der die letzten Daten auf dem Bandaufzeichnungsmedium aufgezeichnet werden sollen, liest und der Aufzeichnungsübersprungabschnitt (320, 350) zulässt, dass der Aufzeichnungsabschnitt einen Datenfrischegrad, der höher als der Datenfrischegrad des vorgegebenen Bereichs ist, in Verbindung mit den Daten aufzeichnet.

5. Bandspeichereinheit (10) nach Anspruch 1, die ferner Folgendes umfasst:
einen Erfassungsabschnitt (230), der einen Frischegrad (505, 525) geschriebener Daten von dem Bandaufzeichnungsmedium erfasst, wobei der Frischegrad geschriebener Daten ein Datenfrischegrad zur Verwendung beim Aufzeichnen auf dem Bandaufzeichnungsmedium ist; und
einen Feststellungsabschnitt (300, 330) eines geschriebenen Frischegrads, der feststellt, ob der geschriebene Datenfrischegrad fehlerhaft ist,
wobei dann, wenn festgestellt wird, dass der geschriebene Datenfrischegrad fehlerhaft ist,
der Leseabschnitt (220) den Frischegrad des fehlerhaften Abschnitts liest, der der Datenfrischegrad eines fehlerhaften Abschnitts beim Aufzeichnen auf dem Bandaufzeichnungsmedium ist, wenn festgestellt wird, dass der Fehler auftritt, und
der Aufzeichnungsübersprungabschnitt (320, 350) zulässt, dass der Aufzeichnungsabschnitt einen Datenfrischegrad, der höher als der Frischegrad des fehlerhaften Abschnitts unmittelbar vor dem fehlerhaften Abschnitt ist, aufzeichnet.

6. Bandspeichereinheit (10) nach Anspruch 1, die sequenziell Daten aufzeichnet und Folgendes umfasst:
einen Aufzeichnungsabschnitt (240) zum Aufzeichnen eines Datenfrischegrads auf einem Bandaufzeichnungsmedium im Zusammenhang mit neuen Daten, die neu aufgezeichnet werden sollen, wobei der Datenfrischegrad Informationen darstellt, die angeben, wie neu die neuen Daten in Bezug auf bereits aufgezeichnete alte Daten sind;
einen Feststellungsabschnitt (310, 340) zum Feststellen, ob bei der Aufzeichnung auf dem Bandaufzeichnungsmedium, die durch den Aufzeichnungsabschnitt ausgeführt wird, ein Fehler auftritt;
einen Aufzeichnungsübersprungabschnitt (320, 350) zum Bewirken, dass der Aufzeichnungsabschnitt einen Wert aufzeichnet, wenn festgestellt wird, dass ein Fehler auftritt, wobei der Wert angibt, dass ein fehlerhafter Abschnitt auf dem Bandaufzeichnungsmedium alte ungültige Daten enthält;
wobei der Aufzeichnungsübersprungabschnitt auf eine Feststellung reagiert, dass der Frischegrad des fehlerhaften Abschnitts höher als der Frischegrad der Daten ist, die dem fehlerhaften Abschnitt unmittelbar vorhergehen, um einen Datenfrischegrad in dem fehlerhaften Abschnitt aufzuzeichnen, der niedriger ist als der Datenfrischegrad, der unmittelbar vor dem fehlerhaften Abschnitt aufgezeichnet wurde.

7. Bandspeichereinheit (10) nach Anspruch 6, die ferner einen Leseabschnitt (220) umfasst, der den Frischegrad eines fehlerhaften Abschnitts liest, wenn festgestellt wird, dass ein Fehler auftritt, wobei der Frischegrad des fehlerhaften Abschnitts der Datenfrischegrad des fehlerhaften Abschnitts ist,
wobei der Aufzeichnungsübersprungabschnitt (320, 350) anhand des Frischegrads des fehlerhaften Abschnitts zulässt, dass der Aufzeichnungsabschnitt einen Datenfrischegrad aufzeichnet, der angibt, dass die Daten mit Ausnahme des fehlerhaften Abschnitts überschrieben werden.

8. Steuereinheit (30) zum Steuern einer Bandantriebseinheit (20) mit einem Aufzeichnungsabschnitt (210, 240), der sequenziell einen Datenfrischegrad (505, 525) auf einem Bandaufzeichnungsmedium in Verbindung mit neuen Daten, die neu aufgezeichnet werden sollen, aufzeichnet, und einem Leseabschnitt (220), der einen Datenfrischegrad liest, wobei der Datenfrischegrad Informationen darstellt, die angeben, wie neu die neuen Daten in Bezug auf bereits aufgezeichnete alte Daten sind, wobei die Steuereinheit Folgendes umfasst:
einen Feststellungsabschnitt (310, 349), der feststellt, ob bei der Aufzeichnung auf dem Bandaufzeichnungsmedium, die durch den Aufzeichnungsabschnitt ausgeführt wird, ein Fehler auftritt, und der zulässt, dass der Leseabschnitt einen Frischegrad eines fehlerhaften Abschnitts liest, wenn festgestellt wird, dass der Fehler auftritt, wobei der Frischegrad des fehlerhaften Abschnitts der Datenfrischegrad eines fehlerhaften Abschnitts auf dem Bandaufzeichnungsmedium ist; und
einen Aufzeichnungsübersprungabschnitt (320, 350), der auf eine Feststellung reagiert, dass der Frischegrad eines fehlerhaften Abschnitts höher ist als der Frischegrad der Daten, die dem fehlerhaften Abschnitt unmittelbar vorhergehen, und der bewirkt, dass der Aufzeichnungsabschnitt einen Datenfrischegrad, der höher ist als der Frischegrad des fehlerhaften Abschnitts unmittelbar vor dem fehlerhaften Abschnitt, aufzeichnet.

9. Steuerverfahren zum Steuern einer Bandspeichereinheit (10), die sequenziell Daten aufzeichnet, wobei das Verfahren die folgenden Schritte umfasst:
Zulassen, dass ein Datenfrischegrad (505, 525) auf einem Bandaufzeichnungsmedium in Verbindung mit neuen Daten, die neu aufgezeichnet werden sollen, aufgezeichnet wird, wobei der Datenfrischegrad Informationen darstellt, die angeben, wie neu die neuen Daten in Bezug auf bereits aufgezeichnete alte Daten sind;
Feststellen, ob beim Aufzeichnen auf dem Bandaufzeichnungsmedium ein Fehler auftritt;
Zulassen, dass ein Frischegrad eines fehlerhaften Abschnitts gelesen wird, wenn festgestellt wird, dass der Fehler auftritt, wobei der Frischegrad eines fehlerhaften Abschnitts der Datenfrischegrad eines fehlerhaften Abschnitts auf dem Bandaufzeichnungsmedium ist; und
in Reaktion auf eine Feststellung, dass der Frischegrad eines fehlerhaften Abschnitts höher ist als der Frischegrad von Daten, die dem fehlerhaften Abschnitt unmittelbar vorhergehen, Zulassen, dass ein Datenfrischegrad, der höher ist als der Frischegrad des fehlerhaften Abschnitts, unmittelbar vor dem fehlerhaften Abschnitt aufgezeichnet wird.

10. Programm zum Steuern einer Bandspeichereinheit (10) durch Verwendung eines Computers, wobei die Bandspeichereinheit sequenziell Daten aufzeichnet, wobei das Programm Programmcode umfasst, der bei seiner Ausführung bewirkt, dass der Computer das Verfahren nach Anspruch 9 ausführt.

## Revendications

1. Dispositif de mémorisation à bande (10) qui enregistre séquentiellement des données, le dispositif comprenant :
une section d'enregistrement (240) destinée à enregistrer un degré de fraîcheur de données (505, 525) sur un support d'enregistrement à bande, en association avec de nouvelles données devant être nouvellement enregistrées, le degré de fraîcheur de données étant une information indiquant à quel point les nouvelles données sont nouvelles par rapport à d'anciennes données déjà enregistrées,
une section de détermination (310, 340) destinée à déterminer si un défaut se produit ou non lors de l'enregistrement sur le support d'enregistrement à bande effectué par la section d'enregistrement,
une section de lecture (220) destinée à lire un degré de fraîcheur de partie défectueuse lorsqu'il est déterminé que le défaut se produit, un degré de fraîcheur de partie défectueuse étant le degré de fraîcheur de données d'une partie défectueuse sur le support d'enregistrement à bande, et
une section de saut d'enregistrement (320, 350) réagissant à une détermination du fait que le degré de fraîcheur de partie défectueuse est supérieur au degré de fraîcheur des données précédant immédiatement la partie défectueuse, destinée à amener la section d'enregistrement à enregistrer un degré de fraîcheur de données supérieur au degré de fraîcheur de données de partie défectueuse, immédiatement avant la partie défectueuse.

2. Dispositif de mémorisation à bande (10) selon la revendication 1, dans lequel, lorsqu'il est déterminé que le degré de fraîcheur de données (505, 525) enregistré immédiatement avant la partie défectueuse avant l'apparition du défaut est supérieur au degré de fraîcheur de partie défectueuse, la section de saut d'enregistrement (320, 350) conserve le degré de fraîcheur de données enregistré immédiatement avant la partie défectueuse avant l'apparition du défaut, sans le modifier.

3. Dispositif de mémorisation à bande (10) selon la revendication 1, dans lequel la section de saut d'enregistrement (320, 350) enregistre de manière continue des données et des degrés de fraîcheur de données (505, 525) dans des parties après la partie défectueuse sur le support d'enregistrement à bande, en utilisant un degré de fraîcheur de données qui est supérieur ou égal au degré de fraîcheur de données enregistré immédiatement avant la partie défectueuse.

4. Dispositif de mémorisation à bande (10) selon la revendication 1,
dans lequel, lorsque les données sont les dernières données devant être enregistrées séquentiellement par la section d'enregistrement (240), la section de lecture (220) lit le degré de fraîcheur de données (505, 525) d'une zone prédéterminée en avant d'une position à laquelle les dernières données doivent être enregistrées sur le support d'enregistrement à bande, et la section de saut d'enregistrement (320, 350) permet à la section d'enregistrement d'enregistrer un degré de fraîcheur de données supérieur au degré de fraîcheur de données de la zone prédéterminée, en association avec les données.

5. Dispositif de mémorisation à bande (10) selon la revendication 1, comprenant en outre :
une section d'acquisition (230) qui acquiert un degré de fraîcheur de données écrit (505, 525) à partir du support d'enregistrement à bande, le degré de fraîcheur de données écrit étant un degré de fraîcheur de données à utiliser pour l'enregistrement sur le support d'enregistrement à bande, et
une section de détermination de degré de fraîcheur écrit (300, 330) qui détermine si le degré de fraîcheur de données écrit est erroné ou non,
où, dans le cas où il est déterminé que le degré de fraîcheur de données écrit est erroné,
la section de lecture (220) lit le degré de fraîcheur de partie défectueuse, qui est le degré de fraîcheur de données d'une partie défectueuse lors de l'enregistrement sur le support d'enregistrement à bande, lorsqu'il est déterminé que le défaut se produit, et
la section de saut d'enregistrement (320, 350) permet à la section d'enregistrement d'enregistrer un degré de fraîcheur de données supérieur au degré de fraîcheur de données de partie défectueuse, immédiatement avant la partie défectueuse.

6. Dispositif de mémorisation à bande (10) qui enregistre séquentiellement des données, comprenant :
une section d'enregistrement (240) destinée à enregistrer un degré de fraîcheur de données sur un support d'enregistrement à bande, en association avec de nouvelles données devant être nouvellement enregistrées, le degré de fraîcheur de données étant une information indiquant à quel point les nouvelles données sont nouvelles par rapport à d'anciennes données déjà enregistrées,
une section de détermination (310, 340) destinée à déterminer si un défaut se produit ou non lors de l'enregistrement sur le support d'enregistrement à bande effectué par la section d'enregistrement, et
une section de saut d'enregistrement (320, 350) destinée à amener la section d'enregistrement à enregistrer une valeur lorsqu'il est déterminé que le défaut se produit, la valeur indiquant qu'une partie défectueuse sur le support d'enregistrement à bande conserve d'anciennes données invalides,
dans lequel la section de saut d'enregistrement réagit à une détermination du fait que le degré de fraîcheur de partie défectueuse est supérieur au degré de fraîcheur des données précédant immédiatement la partie défectueuse, pour enregistrer un degré de fraîcheur de données dans la partie défectueuse qui est inférieur au degré de fraîcheur de données enregistré immédiatement avant la partie défectueuse.

7. Dispositif de mémorisation à bande (10) selon la revendication 6, comprenant en outre une section de lecture (220) qui lit un degré de fraîcheur de partie défectueuse lorsqu'il est déterminé que le défaut se produit, le degré de fraîcheur de partie défectueuse étant le degré de fraîcheur de données de la partie défectueuse,
dans lequel, sur la base du degré de fraîcheur de partie défectueuse, la section de saut d'enregistrement (320, 350) permet à la section d'enregistrement d'enregistrer un degré de fraîcheur de données indiquant que les données seront écrasées en écriture à l'exception de la partie défectueuse.

8. Unité de commande (30) destinée à commander une unité de lecture à bande (20) comprenant une section d'enregistrement (210, 240) qui enregistre séquentiellement un degré de fraîcheur de données (505, 525) sur un support d'enregistrement à bande, en association avec de nouvelles données devant être nouvellement enregistrées, et une section de lecture (220) qui lit un degré de fraîcheur de données, le degré de fraîcheur de données étant une information indiquant à quel point les nouvelles données sont nouvelles par rapport à d'anciennes données déjà enregistrées, l'unité de commande comprenant :
une section de détermination (310, 340) qui détermine si un défaut se produit ou non lors de l'enregistrement sur le support d'enregistrement à bande effectué par la section d'enregistrement, et qui permet à la section de lecture de lire un degré de fraîcheur de partie défectueuse lorsqu'il est déterminé que le défaut se produit, le degré de fraîcheur de partie défectueuse étant le degré de fraîcheur de données d'une partie défectueuse sur le support d'enregistrement à bande, et
une section de saut d'enregistrement (320, 350) réagissant à une détermination du fait que le degré de fraîcheur de partie défectueuse est supérieur au degré de fraîcheur des données précédant immédiatement la partie défectueuse, ce qui amène la section d'enregistrement à enregistrer un degré de fraîcheur de données supérieur au degré de fraîcheur de partie défectueuse, immédiatement avant la partie défectueuse.

9. Procédé de commande destiné à commander un dispositif de mémorisation à bande (10) qui enregistre séquentiellement des données, le procédé comprenant les étapes consistant à :
permettre d'enregistrer un degré de fraîcheur de données (505, 525) sur un support d'enregistrement à bande, en association avec de nouvelles données devant être nouvellement enregistrées, le degré de fraîcheur de données étant une information indiquant à quel point les nouvelles données sont nouvelles par rapport à d'anciennes données déjà enregistrées,
déterminer si un défaut se produit ou non lors de l'enregistrement sur le support d'enregistrement à bande,
permettre de lire un degré de fraîcheur de partie défectueuse lorsqu'il est déterminé que le défaut se produit, le degré de fraîcheur de partie défectueuse étant le degré de fraîcheur de données d'une partie défectueuse sur le support d'enregistrement à bande, et
en réponse à une détermination du fait que le degré de fraîcheur de partie défectueuse est supérieur au degré de fraîcheur des données précédant immédiatement la partie défectueuse, permettre d'enregistrer un degré de fraîcheur de données supérieur au degré de fraîcheur de données de partie défectueuse immédiatement avant la partie défectueuse.

10. Programme destiné à commander un dispositif de mémorisation à bande (10) en utilisant un ordinateur, le dispositif de mémorisation à bande enregistrant séquentiellement des données, le programme comprenant un code de programme qui, lorsqu'il est exécuté, amène l'ordinateur à exécuter le procédé selon la revendication 9.
